# NEW EUROPEAN PATENT SPECIFICATION

(11) **EP 2 568 164 B2**
(45) Date of publication and mention of the opposition decision: **12.02.2020**
(45) Mention of the grant of the patent: 02.11.2016
(21) Application number: 12183445.1
(22) Date of filing: 07.09.2012
(51) Int. Cl.: F03D 1/00

(54) **Wind Turbine Auxiliary Unit**
Windkraftturbinenhilfseinheit
Unité auxiliaire d'éolienne

(30) Priority: 07.09.2011 IT MI20111606
(43) Date of publication of application: 13.03.2013
(73) Proprietor: WINDFIN B.V., 2451 VW Leimuiden (NL)
(72) Inventor: Casazza, Matteo, 39049 Val di Vizze (IT)
(74) Representative: Bergadano, Mirko

(56) References cited:
- EP-A1- 1 134 410
- EP-A1- 1 291 521
- EP-A1- 2 161 445
- EP-A1- 2 317 137
- WO-A1-2007/096008
- DE-A1-102005 025 646

## Description

The present invention relates to a wind power turbine.

Wind power turbines normally comprise a vertical structure; a nacelle mounted for rotation on top of the vertical structure; a blade assembly for converting the kinetic energy of the wind to rotation; and a rotary electric machine for converting rotation to electric energy which is fed into the electric power grid. In addition to the rotary electric machine, wind power turbines also comprise a number of, e.g. electric, electronic and mechanical, devices for feeding the electric energy produced into the grid with the correct frequency and phase.

The space available inside the nacelle is sometimes limited : because of the maximum permitted width of the nacelle, the size of which affects the aerodynamic profile of the turbine; because of weight problems; and because of problems concerning the construction of the nacelle and the structure of the turbine itself. Moreover, to increase the electric power of the turbine once it is installed, even more space is required, over and above that calculated at the design stage.

In other words, the space inside the nacelle is not always sufficient to accommodate all the equipment necessary to operate the turbine.

One known solution of installing the equipment along the inside of the vertical structure has the drawback of reducing the space inside the structure for access by workers, maintenance equipment and spare parts.

Another known solution of installing the equipment outside the vertical structure, close to the foundation of the turbine, has the drawback of requiring long, large-cross-section, low-voltage cables to connect the rotary electric machine.

A wind turbine nacelle, comprising a moving crane for moving generator from outside of the nacelle to inside nacelle, is disclosed in document EP 1291521.

It is an object of the present invention to provide a wind power turbine designed to eliminate the drawbacks of the known art.

According to the present invention, there is provided a wind power turbine according to claim 1.

The auxiliary unit provides space close to the nacelle and the rotary electric machine, by providing an auxiliary chamber in which to house the turbine operating device. Once the auxiliary unit is fitted to the nacelle, the device is therefore located adjacent to the rotary electric machine, thus solving the problems posed by limited manoeuvring space inside the turbine, and with no need for long electric cables.

Moreover, by means of the present invention, the device can be handled using the bridge crane, for faster, easier maintenance and installation.

The auxiliary unit may also be used to advantage for retrofit enhancing existing wind power turbines.

In a preferred embodiment, the auxiliary unit comprises a bottom opening formed in the floor to allow passage of the device.

By virtue of the present invention, the device can be inserted into or removed from the auxiliary unit using the bridge crane, without necessarily going through the vertical structure, but directly from outside the structure, thus simplifying first installation, maintenance and assembly.

In a preferred embodiment, the frame comprises at least one top beam and at least one bottom beam parallel to each other.

In a preferred embodiment, the bridge crane comprises a guide forming an integral part of the frame.

According to the invention, the guide extends over a floor, and is longer than the floor so as to extend partly inside the nacelle.

By virtue of the present invention, the auxiliary unit can be fitted to the nacelle to locate the auxiliary chamber adjacent to the nacelle and so locate at least one device adjacent to the rotary electric machine. Moreover, the auxiliary unit may be assembled before or after the device is assembled inside it.

In a preferred embodiment, the auxiliary chamber has a rear seat and lateral seats for housing a number of devices.

By virtue of the present invention, once the auxiliary unit is fitted to the nacelle, the number of devices are located adjacent to the rotary electric machine, so energy is conducted more efficiently from the rotary electric machine to the number of devices.

By virtue of the present invention, the wind power turbine has the auxiliary chamber for locating the at least one device adjacent to the rotary electric machine to enhance the efficiency of the turbine. The present invention also provides for retrofit enhancing existing wind power turbines.

Also, the device can be inserted into or removed from the auxiliary chamber using the bridge crane, without necessarily going through the vertical structure, but directly from outside the structure, thus simplifying first installation, maintenance and assembly.

In a preferred embodiment, the nacelle has at least one opening for housing part of the auxiliary unit in the nacelle.

By virtue of the present invention, the auxiliary unit is connected removably to the nacelle, to enhance the flexibility of the wind power turbine. In fact, at first installation, the device may be fitted to the auxiliary unit on the ground, and the auxiliary unit then fitted to the nacelle; or the auxiliary unit may be fitted to the nacelle, and the device then fitted to the auxiliary unit using the bridge crane. The wind powerturbine is also more flexible in terms of maintenance, thus reducing downtime and maintenance costs.

According to the invention, the bridge crane comprises a guide defining part of the frame and extending partly inside the nacelle.

By virtue of the present invention, the bridge crane can move, and so manoeuvre the device or other units, inside the nacelle, thus improving manoeuvrability and simplifying first installation and maintenance.

In a preferred embodiment of the present invention, said guide extends over the vertical structure to enable the bridge crane to perform loading and unloading operations inside the vertical structure.

By virtue of the present invention, the bridge crane can move the device from the vertical structure to the auxiliary unit, and vice versa, through the nacelle, thus greatly improving manoeuvrability of the device at both assembly and maintenance stages, and so simplifying assembly and handling work as a whole.

Anotherobject of the present invention is to provide a wind power turbine assembly method designed to eliminate the drawbacks of the known art.

According to the present invention, there is provided a wind power turbine assembly method, according to claim 9.

The present invention provides for simplifying assembly of a wind power turbine by making it more modular in design, and for reducing construction cost by virtue of the scale economy this affords. The present invention also has the advantage of enabling all the connections and testing to be carried out on the ground, i.e. faster, easier, with more work space, and in safer working conditions, as opposed to many metres off the ground.

A number of non-limiting embodiments of the present invention will be described by way of example with reference to the accompanying drawings, in which:
Figure 1 shows a partly hatched side view, with parts removed for clarity, of a wind power turbine and auxiliary unit in accordance with the present invention;
Figure 2 shows a view in perspective of a detail in Figure 1;

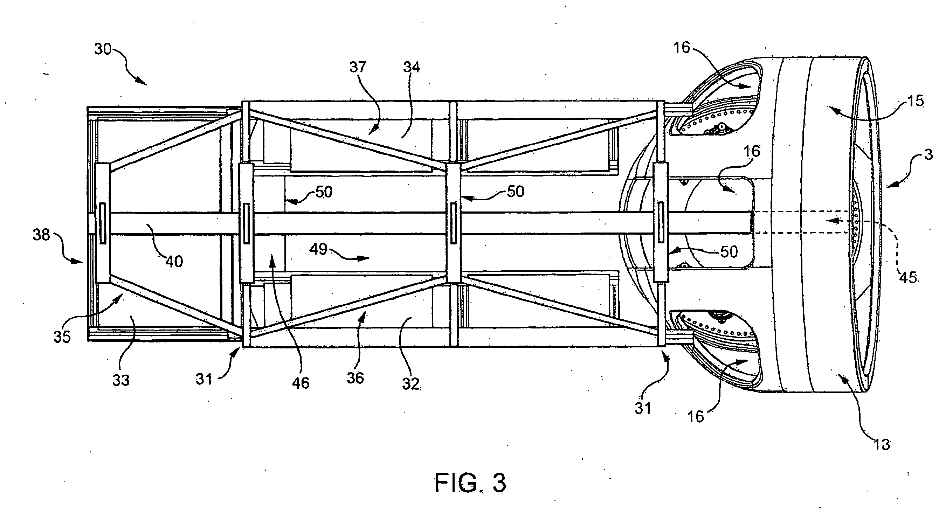

Figure 3 shows a top plan view of a detail in Figure 1;
Figure 4 shows a view in perspective of an alternative embodiment to Figure 1.

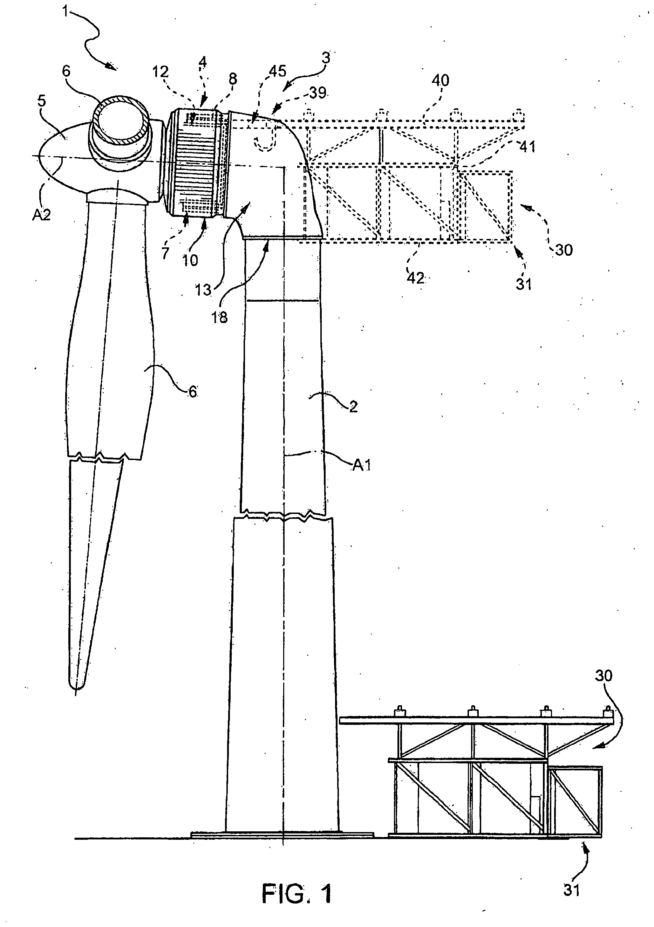

Number 1 in Figure 1 indicates as a whole a wind power turbine for producing electric energy, and which comprises a vertical structure 2; a nacelle 3; a rotary electric machine 4; a hub 5; and three blades 6 (only two shown in Figure 1). Nacelle 3 is mounted to rotate with respect to vertical structure 2 about an axis A1, and hub 5 rotates with respect to nacelle 3 about an axis A2. Rotary electric machine 4 comprises a stator 7 partly defining nacelle 3, or rather the outer shell of nacelle 3; and a rotor 8 connected rigidly to hub 5. And a bearing is located between stator 7 and rotor 8, close to the connection of hub 5 to rotor 8.

Stator 7 comprises a tubular body 10, and a number of active stator sectors arranged about axis A2 and fitted to tubular body 10; and rotor 8 comprises a tubular body 12, and a number of active rotor sectors arranged about axis A2 and fitted to tubular body 12.

The active stator and rotor sectors extend parallel to axis A2, are positioned facing one another and separated by a gap, and are insertable and removable axially with respect to respective tubular bodies 10 and 12. In the example shown, rotary electric machine 4 is a synchronous, permanent-magnet electric machine; each active stator sector is defined by a magnetic guide coupled to a coil (not shown); and each active rotor sector is defined by magnetic guides coupled to permanent magnets.

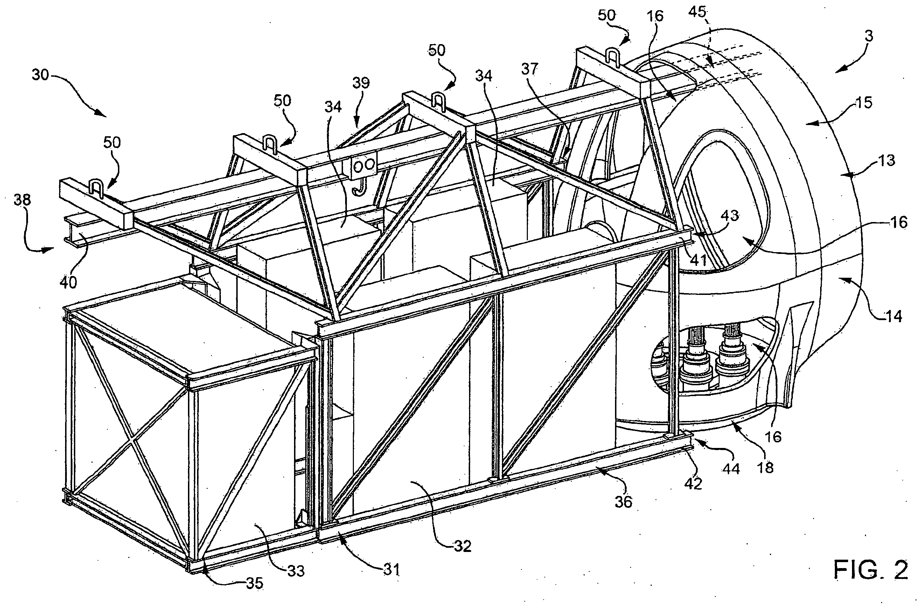

As shown in Figure 2, nacelle 3 comprises an outer shell 13, in turn comprising a bottom nacelle portion 14 and a top nacelle portion 15, in both of which are formed openings 16. Nacelle portions 14 and 15 may be transported separately and assembled at the installation site of wind power turbine 1.

Nacelle 3 comprises a flange 18 for connection to a pivot of vertical structure 2.

More specifically, bottom portion 14 of nacelle 3 comprises flange 18 for connection to the pivot, and top portion 15 is connected to bottom portion 14.

With reference to the attached drawings, wind power turbine 1 comprises an auxiliary unit 30 with a frame 31 for connection to nacelle 3 of wind power turbine 1; and three devices 32, 33, 34 for conditioning the electric energy produced by rotary electric machine 4, for supply to the electric power grid.

Auxiliary unit 30 comprises an auxiliary chamber formed in frame 31 to house devices 32, 33, 34, and comprising a rear seat 35 and two lateral seats 36, 37.

Electric energy conditioning device 33 is an electric transformer housed in rear seat 35 in the auxiliary chamber.

Devices 32 and 34 are switch converters housed in respective lateral seats 36 and 37, and for converting electric quantities, such as voltage and/or frequency and/or current, of the electric energy from rotary electric machine for supply to the power grid.

Auxiliary unit 30 comprises a bridge crane 39 for handling devices 32, 33, 34. And frame 31 comprises a top central beam 40 fitted in part inside nacelle 3, and which defines a guide 38 of the bridge crane 39. The guide 38 extends along auxiliary unit 30 and inside nacelle 3 so as to allow to the bridge crane 38 to handle devices 32, 33, 34 inside the auxiliary chamber and nacelle 3. In other words, bridge crane 39 is connected movably to top central beam 40.

Frame 31 comprises top beams 41 and bottom beams 42 parallel to one another and having respective ends 43 and 44; top beams 41 are fixed inside nacelle 3 through openings 16; and bottom beams 42 are fixed outside nacelle 3.

Nacelle 3 has an opening 45 formed in top portion 15 of nacelle 3, and which extends parallel to axis A2 along the whole length of nacelle 3 to house top central beam 40.

In other words, top central beam 40 is inserted inside opening 45 over the whole length of nacelle 3, so auxiliary unit 30 extends mostly outside nacelle 3.

Bridge crane 39, connected to top central beam 40, is designed to move from a first position, in which bridge crane 39 is located inside nacelle 3 and adjacent to rotary electric machine 4, to a second position, in which bridge crane 39 is located at one end of top central beam 40, outside nacelle 3 and over rear seat 35. Auxiliary unit 30 also comprises a floor 46 located on the bottom side of auxiliary unit 30 and connected to frame 31 to allow passage of maintenance workers.

Auxiliary unit 30 has a bottom opening 49 formed in floor 46 and closed by a removable hatch to allow insertion and removal of devices 32, 33, 34 in and out of auxiliary unit 30 using bridge crane 39.

Devices 32, 33, 34 can also be inserted and removed, using bridge crane 39, through the passage in nacelle 3 and vertical structure 2.

Auxiliary unit 30 also comprises external reversible connecting devices 50 connected to top central beam 40 to handle auxiliary unit 30 using cranes or similar devices.

Auxiliary unit 30 also comprises an outer casing (not shown) enclosing the auxiliary chamber and frame 31 to protect devices 32, 33, 34 and other equipment inside the auxiliary chamber from external agents.

When constructing auxiliary unit 30, devices 32, 33, 34 are fitted to frame 31 before fixing auxiliary unit 30 to nacelle 3 using a crane. This has the advantage of enabling all the connections and testing to be carried out on the ground, as opposed to many metres off the ground, allows workers more space in which to move freely, and so simplifies maintenance, and reduces maintenance time, downtime, and cost.

According to another operational mode preferably adopted during the servicing, devices 32, 33, 34 are fitted to the frame 31 after frame 31 is fitted to nacelle 3. More specifically, devices 32, 33, 34 are attached to bridge crane 39 and hoisted through bottom opening 49 into frame 31. This simplifies maintenance and replacement of devices 32, 33, 34.

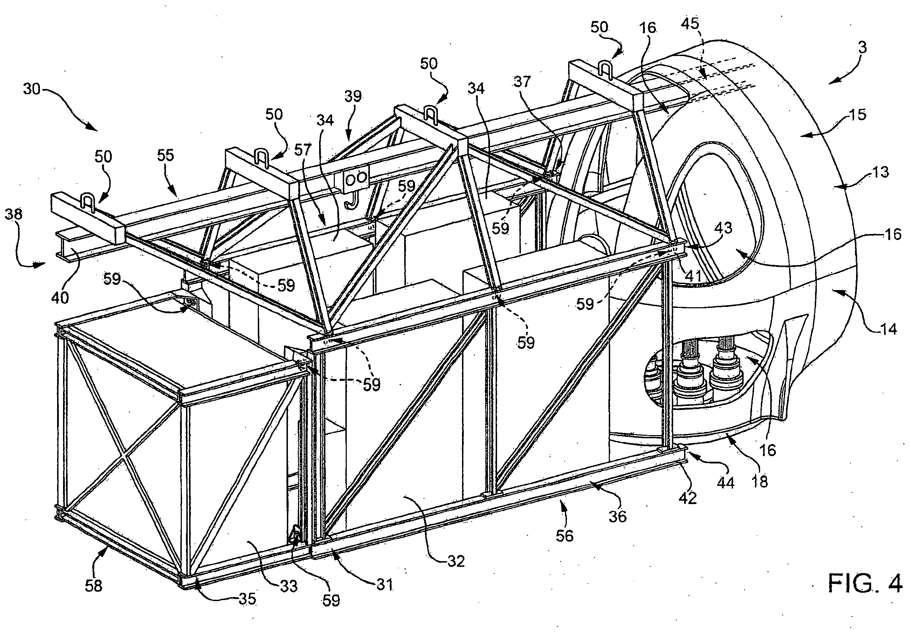

In a preferred embodiment shown in Figure 4, frame 31 is divided into a top frame portion 55; two lateral frame portions 56, 57, one for each side; and a rear frame portion 58. Top frame portion 55 is connected to the two lateral frame portions 56, 57 by fastening means 59; rear frame portion 58 is connected to lateral frame portions 56, 57 by fastening means 59; top frame portion 55 comprises bridge crane 39, guide 38, and top central beam 41; rear frame portion 58 defines rear seat 35; and lateral frame portions 56 and 57 comprise top beams 41 and bottom beams 42, and define respective lateral seats 36 and 37.

Frame portions 55, 56, 57, 58 are transported separately and later assembled into frame 31 at the installation site.

By virtue of the present invention, auxiliary unit 30 can be fitted to the outside of nacelle 3, adjacent to rotary electric machine 4, thus solving the problems posed by limited manoeuvring space inside wind power turbine 1, and with no need for long electric cables. More specifically, auxiliary unit 30 can be moved into position and fixed to nacelle 3 using an external crane, and may also be used to advantage for retrofit enhancing existing wind power turbines.

Clearly, changes may be made to the equipment and method as described herein without, however, departing from the scope of the accompanying Claims.

## Claims

1. A wind power turbine comprising a vertical structure (2); a nacelle (3) fitted in rotary manner to the vertical structure (2); a rotary electric machine (4); and an auxiliary unit (30); the auxiliary unit (30) comprising a frame (31) designed for connection to the nacelle (3) of the wind power turbine (1) and defining an auxiliary chamber for housing at least one device (32, 33, 34) for conditioning electric energy produced by the rotary electric machine (4); and a bridge crane (39) for handling the device (32, 33, 34) inside and outside the auxiliary chamber; wherein the bridge crane (39) comprises a guide (38) forming an integral part of the frame (31); wherein the guide (38) extends over a floor (46), and is longer than the floor (46) so as to extend partly inside the nacelle (3) and wherein the frame (31) is connected removably to the nacelle (3) of the wind power turbine.

2. A Wind Power Turbine as claimed in Claim 1, and a bottom opening (49) formed in the floor (46) to allow passage of the device (32, 33, 34).

3. A Wind Power Turbine as claimed in Claim 1 or 2, wherein the frame (31) comprises at least one top beam (41) and at least one bottom beam (42) parallel to each other.

4. A Wind Power Turbine as claimed in any one of the foregoing Claims, wherein the auxiliary chamber has a rear seat (35) and lateral seats (36, 37) for housing a number of devices (32, 33, 34).

5. A Wind Power Turbine as claimed in any one of the foregoing Claims, wherein the frame (31) is divided into frame portions (55, 56, 57, 58) connected to one another and defining the auxiliary chamber.

6. A wind power turbine as claimed in Claim 1, wherein the nacelle (3) has at least one opening (16, 45) for housing part of the auxiliary unit (30) in the nacelle (3).

7. A wind power turbine as claimed in Claim 6, wherein said guide (38) extends over the vertical structure (2) to enable the bridge crane (39) to perform loading and unloading operations inside the vertical structure (2).

8. A wind power turbine as claimed in one of Claims 1 to 7, wherein the nacelle (3) is divided into a nacelle portion (14) and a further nacelle portion (15) connected to each other.

9. A wind power turbine assembly method, the wind power turbine as claimed in one of the previous claims; the method comprising the steps of assembling a rotary electric machine (4) to the nacelle (3); assembling a device (32, 33, 34) to the frame (31); and assembling the frame (31) of the auxiliary unit (30) to the nacelle (3).

## Patentansprüche

1. Windkraftturbine umfassend eine vertikale Struktur (2); eine Gondel (3), die drehend in der vertikalen Struktur (2) eingebaut ist; eine elektrische Rotationsmaschine (4); und eine Hilfseinheit (30); wobei die Hilfseinheit (30) einen Rahmen (31) umfasst, der zum Verbinden zur Gondel (3) der Windkraftturbine (1) ausgelegt ist und zum Bestimmen einer Hilfskammer zum Beherbergen mindestens einer Vorrichtung (32, 33, 34) zur Aufbereitung elektrischer Energie, die von der elektrischen Rotationsmaschine (4) erzeugt wird; und einen Brückenkran (39) zum Handhaben der Vorrichtung (32, 33, 34) innerhalb und außerhalb der Hilfskammer; wobei der Brückenkran (39) eine Führung (38) umfasst, die einen integralen Bestandteil des Rahmens (31) bildet; wobei sich die Führung (38) über einen Boden (46) erstreckt und länger als der Boden (46) ist, um sich teilweise im Innern der Gondel (3) zu erstrecken, und wobei der Rahmen (31) lösbar mit der Gondel (3) der Windkraftturbine verbunden ist.

2. Windkraftturbine nach Anspruch 1 und eine untere Öffnung (49), die in dem Boden (46) gebildet ist, um den Durchgang der Vorrichtung (32, 33, 34) zu erlauben.

3. Windkraftturbine nach Anspruch 1 oder 2, wobei der Rahmen (31) mindestens einen oberen Träger (41) und mindestens einen unteren Träger (42), die parallel zueinander sind, umfasst.

4. Windkraftturbine nach einem beliebigen der vorhergehenden Ansprüche, wobei die Hilfskammer einen hinteren Sitz (35) und seitliche Sitze (36, 37) zum Beherbergen einer Anzahl von Vorrichtungen (32, 33, 34) umfasst.

5. Windkraftturbine nach einem beliebigen der vorhergehenden Ansprüche, wobei der Rahmen (31) in Rahmenabschnitte (55, 56, 57, 58) geteilt ist, die miteinander verbunden sind und die Hilfskammer definieren.

6. Windkraftturbine nach Anspruch 1, wobei die Gondel (3) mindestens eine Öffnung (16, 45) zum Beherbergen eines Teils der Hilfseinheit (30) in der Gondel (3) aufweist.

7. Windkraftturbine nach Anspruch 6, wobei sich die Führung (38) über die vertikale Struktur (2) erstreckt, um zu ermöglichen, dass der Brückenkran (39) Belade- und Entladevorgänge im Innern der vertikalen Struktur (2) ausführt.

8. Windkraftturbine nach einem der Ansprüche 1 bis 7, wobei die Gondel (3) in einen Gondelabschnitt (14) und einen weiteren Gondelabschnitt (15) geteilt ist, die miteinander verbunden sind.

9. Montageverfahren für eine Windkraftturbine, wobei die Windkraftturbine nach einem der vorhergehenden Ansprüche; das Verfahren folgende Schritte umfasst: Montieren einer elektrischen Rotationsmaschine (4) an die Gondel (3); Montieren einer Vorrichtung (32, 33, 34) an den Rahmen (31); und Montieren des Rahmens (31) der Hilfseinheit (30) an die Gondel (3).

## Revendications

1. Turbine éolienne comprenant une structure verticale (2) ; une nacelle (3) montée de manière rotative sur la structure verticale (2) ; une machine électrique tournante (4) ; et une unité auxiliaire (30) ; l'unité auxiliaire (30) comprenant un cadre (31) conçu pour la connexion à la nacelle (3) de la turbine éolienne (1) et définissant une chambre auxiliaire pour loger au moins un dispositif (32, 33, 34) de conditionnement de l'énergie électrique produite par la machine électrique tournante (4) ; et un pont roulant (39) pour manipuler le dispositif (32, 33, 34) à l'intérieur et à l'extérieur de la chambre auxiliaire (4) ; dans laquelle le pont roulant (39) comprend un guide (38) faisant partie intégrante du cadre (31) ; dans laquelle le guide (38) s'étend sur un plancher (46), et est plus long que le plancher (46) de manière à s'étendre partiellement à l'intérieur de la nacelle (3) et dans laquelle le cadre (31) est connecté de manière amovible à la nacelle (3) de la turbine éolienne.

2. Turbine éolienne selon la revendication 1, et une ouverture inférieure (49) ménagée dans le plancher (46) pour permettre le passage du dispositif (32, 33, 34).

3. Turbine éolienne selon la revendication 1 ou 2, dans laquelle le cadre (31) comprend au moins une poutre supérieure (41) et au moins une poutre inférieure (42) parallèles entre elles.

4. Turbine éolienne selon l'une quelconque des revendications précédentes, dans laquelle la chambre auxiliaire comporte un siège arrière (35) et des sièges latéraux (36, 37) pour loger un certain nombre de dispositifs {32, 33, 34).

5. Turbine éolienne selon l'une quelconque des revendications précédentes, dans laquelle le cadre (31) est divisé en parties de cadre (55, 56, 57, 58) reliées entre elles et définissant la chambre auxiliaire.

6. Turbine éolienne selon la revendication 1, dans laquelle la nacelle (3) comporte au moins une ouverture (16, 45) destinée à loger une partie de l'unité auxiliaire (30) dans la nacelle (3).

7. Turbine éolienne selon la revendication 6, dans laquelle ledit guide (38) s'étend au-dessus de la structure verticale (2) pour permettre au pont roulant (39) d'effectuer des opérations de chargement et de déchargement à l'intérieur de la structure verticale (2).

8. Turbine éolienne selon l'une des revendications 1 à 7, dans laquelle la nacelle (3) est divisée en une partie de nacelle (14) et une autre partie de nacelle (15) reliées entre elles.

9. Procédé d'assemblage de turbine éolienne, la turbine éolienne selon l'une quelconque des revendications précédentes ; le procédé comprenant les étapes d'assemblage d'une machine électrique tournante (4) à la nacelle (3); d'assemblage d'un dispositif (32, 33, 34) au cadre (31), et d'assemblage du cadre (31) de l'unité auxiliaire (30) à la nacelle (3).
